# EUROPEAN PATENT APPLICATION

(11) **EP 1 548 674 A1**
(43) Date of publication of application: **29.06.2005**
(21) Application number: 04017674.5
(22) Date of filing: 26.07.2004
(51) Int. Cl.: G08B 13/24

(54) **Radio IC tag, method and apparatus for manufacturing the same**

(30) Priority: 25.12.2003 JP 2003431025
(71) Applicant: Hitachi, Ltd., Chiyoda-ku, Tokyo 101-8010 (JP)
(72) Inventor: Sakama, Isao Hitachi, Ltd. Intellectual Prop. Gp ., Chiyoda-ku Tokyo 100-8220 (JP); Ashizawa, Minoru Hitachi, Ltd. Intell. Prop. Gp., Chiyoda-ku Tokyo 100-8220 (JP)
(74) Representative: Strehl Schübel-Hopf & Partner

(57) **Abstract**

A radio IC tag includes a first antenna (3) and a first spacer (6), and is arranged so as to generate an operating power by a radio wave received at the first antenna (3) and having a predetermined frequency, operate an IC chip (4) using the power, read out identification information stored in the IC chip, and transmits the identification information, further includes a second antenna (8) having a predetermined length for resonating with the radio wave having the predetermined frequency, and a second spacer (7) provided between the first antenna (3) and the second antenna (8) for holding a distance between the both antennas.

## Description

### BACKGROUND OF THE INVENTION

### Field of the Invention:

The present invention relates to a radio IC tag which can be suitably mounted to a member having a large dielectric constant, a method for manufacturing the radio IC tag, and an apparatus for manufacturing the radio IC tag.

### Description of the Related Art:

For purposes of preventing an article itself and the article management from theft and also preventing the article from falsification, a radio tag for acquiring article information from an article in a non-contact manner has been developed and is proceeding toward practical utilization. For example, JP-A-11-339142 discloses a resonance circuit including a conductor as an antenna and an insulating-based material sheet used as a spacer, both used for a conventional radio tag for a purpose of preventing an article from theft. Accordingly, a radio wave having a predetermined frequency is transmitted to the radio tag (a tag for preventing an article from theft in the above publication), and the radio tag receives the transmitted radio wave to thereby monitor the theft or robbery of the article. The radio tag has a high sensitivity or a long detectable distance.

However, the aforementioned radio tag has a problem that, when the tag is bonded to a metallic article as an example, it becomes impossible to neglect the fact that radio wave received by the radio tag is absorbed into the metallic article, which results in that the intensity of radio wave for the radio tag to transmit becomes weak and thus its detectable distance becomes short.

This problem still holds true even for a radio IC tag which is a combination of an IC chip and the radio tag added thereto. The radio IC tag is made up of a base material, an antenna formed as a metallic foil provided on the base material, an IC chip arranged on the antenna and having information written therein, and a spacer disposed between the base material and an article. When a radio wave having a predetermined frequency is transmitted from an external antenna to the radio IC tag, the radio IC tag generates an operating power from the radio wave received at the antenna, operates the IC chip using the power, reads out the information previously written in the IC chip from the chip, and transmits the information from the antenna. The information is received by the external antenna. In the case where the radio IC tag is bonded to a metallic article or the like, the radio wave received by the radio IC tag is partially absorbed into the metallic article. As a result, it becomes impossible to obtain a sufficient operating power and therefore impossible also to read out the information and transmit the information to the place located away by a necessary distance.

In order to solve the above problem, it becomes necessary to increase the thickness of the spacer. However, this leads to the fact that the radio IC tag is increased in size (the thickness of the tag is increased in this example).

FIG. 6 is a graph showing a communication distance characteristic of the aforementioned conventional radio IC tag when the thickness of the spacer is varied. When the spacer has a thickness of 1 mm, the communication distance is as short as about 10 mm. On the contrary, in order to obtain a longest communication distance (of about 150 mm), it becomes necessary for the spacer to have a thickness of 15 mm or more. In the above example, the length of the antenna is assumed to be 53 mm.

In this way, the thicker the spacer is the longer the communication distance is. However, the thicker spacer for obtaining the longer communication distance results in the increased size of the radio IC tag. This involves disadvantages including its limited application field. When such a radio IC tag is actually used, the tag also may be hit by persons or objects and be peeled off. In this way, such a tag has a poor usability.

### SUMMARY OF THE INVENTION

It is therefore an object of the present invention to provide a radio IC tag which can be made thin and can have a long communication distance, a method for manufacturing the radio IC tag, and an apparatus for manufacturing the radio IC tag.

In accordance with the present invention, the above object is attained by a radio IC tag which comprises a first antenna and a first spacer, and is arranged so as to generate an operating power by a radio wave received at the first antenna and having a predetermined frequency, operate an IC chip using the power, read out identification information stored in the IC chip, and transmit the identification information. The radio IC tag further comprises a second antenna having a predetermined length for resonating with the radio wave having the predetermined frequency, and a second spacer provided between the first antenna and the second antenna for holding a distance between the both antennas.

Other objects, features and advantages of the invention will become apparent from the following description of the embodiments of the invention taken in conjunction with the accompanying drawings.

### BRIEF DESCRIPTION OF THE DRAWINGS

FIG. 1 is a perspective view showing a structure of a radio IC tag in accordance with a first embodiment of the present invention;
FIG. 2A is a cross-sectional view of the radio IC tag in accordance with the first embodiment of the present invention taken along a width direction;
FIG. 2B is a cross-sectional view of the radio IC tag in accordance with the first embodiment of the present invention taken along a longitudinal direction;
FIG. 3 is a characteristic graph showing a relation of a communication distance to the length of a second antenna in the radio IC tag in accordance with the first embodiment of the present invention;
FIG. 4 is a configuration of an IC tag system which includes the radio IC tag according to the first embodiment of the invention, a reader for transmitting a radio wave having a predetermined frequency to the radio IC tag, an external antenna, and a host computer;
FIG. 5 is an arrangement of an apparatus for manufacturing the radio IC tag in accordance with a second embodiment of the present invention; and
FIG. 6 is a characteristic graph showing a relation of a communication distance to the thickness of a first spacer in a conventional radio IC tag.

### DETAILED DESCRIPTION OF THE EMBODIMENTS

The invention will be detailed in connection with preferred embodiments of the invention with reference to the accompanying drawings.

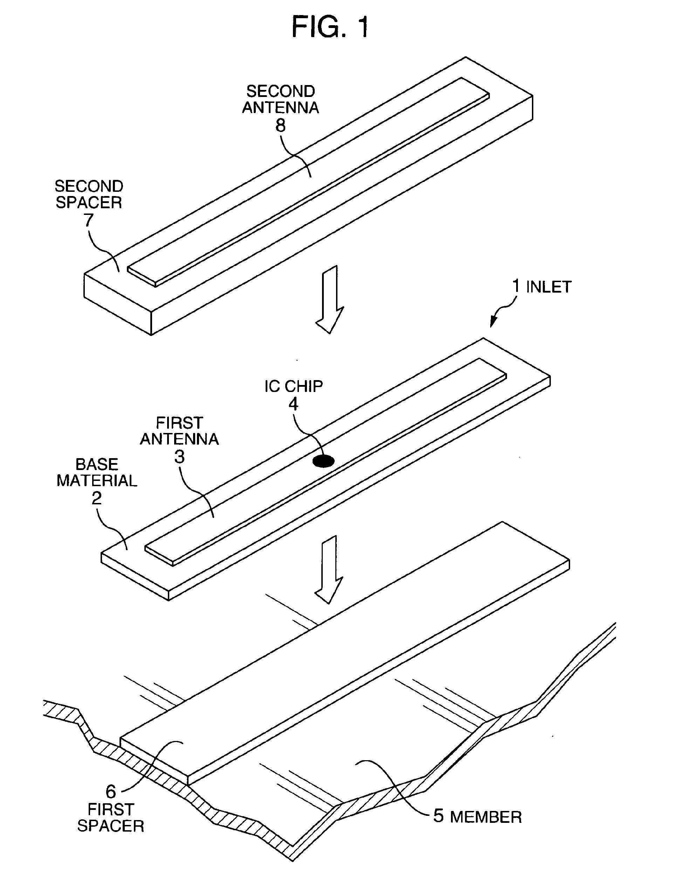

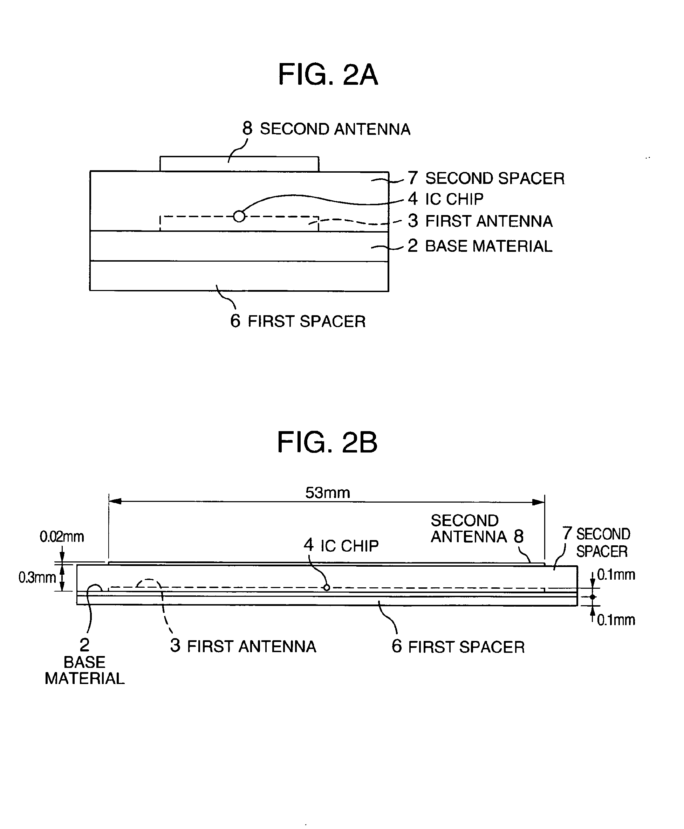

FIG. 1 shows a structure of a radio IC tag in accordance with a first embodiment of the present invention. FIG. 2A is a cross-sectional view of the radio IC tag shown in FIG. 1 taken along a width direction, and FIG. 2B is a cross-sectional view of the radio IC tag shown in FIG. 1 taken along a longitudinal direction. A plate-shaped assembly in the radio IC tag of FIG. 1, which includes a base material 2, an antenna (first antenna) 3, and an IC chip 4, is generally referred to as an inlet 1. The radio IC tag is mounted on a member 5.

The radio IC tag of the present embodiment, as shown in FIG. 1, includes the inlet 1, a first spacer 6 mounted on the lower side (e.g., on its one side having the metallic member 5) of the inlet 1, a second spacer 7 mounted on the upper side (e.g., on the other side opposed to the member 5) of the inlet 1, and a second antenna 8 mounted on the second spacer 7 and functioning as a resonator. The inlet 1 has the IC chip 4 having ID information stored therein, the first antenna 3 connected to the IC chip 4, and the base material 2 to which the first antenna 3 is mounted.

As an example of the inlet 1 itself, more specifically, the base material 2 is shaped to a plate and made of a polyimide resin material, the first antenna 3 is made of a copper foil and plated with tin on its upper side, and the IC chip 4 has an ID code of 128 bits at the most previously written therein. The first antenna 3 and the IC chip 4 are provided on the base material. The thickness of the first spacer 6 to be provided on the lower side of the inlet 1 is 0.1 mm in the example of FIG. 2B. As the material of the first spacer 6, a foam material having a dielectric constant close to 1 such as, e.g., urethane-based, acryl-based or synthetic rubber based is used. These materials are suitably selected taking cost, durability, and bonding strength into consideration. No restriction is specifically imposed on the dimensions of the first spacer 6 in the width and longitudinal directions.

In this connection, the inlet 1 itself is already known. More specifically, there is already known a package (referred generally to as TCP (tape carrier package)) inlet material or a sheet inlet material wherein many (e.g., 10,000) of the first antennas 3 each connected to the IC chip 4 are arranged toward its width direction in the form of parallel and spaced strips on a plate-shaped base material (meaning a base material before cut into pieces each having the width dimension of the base material 2 in FIG. 1), and then the base material is wound into a package or used as it is.

The second spacer 7 to be mounted on the upper side of the inlet 1 may be made of an insulating material including a foam material or a rubber having a dielectric constant close to 1 such as urethane-based, acryl-based or synthetic rubber based. The thickness of the second spacer is set at 0.3 mm in the example of FIG. 2B. No restriction is specifically imposed on the dimensions of the second spacer 7 in the width and longitudinal directions, and the second spacer can be set to have easily manufacturable dimensions.

The second antenna 8 mounted on the second spacer 7 is made of a copper foil similarly to the first antenna 3. However, the material of the second antenna is not limited to the copper foil but the second antenna may be also made of an aluminum foil, conductive ink (carbon resin incorporated into ink), or the like. The thickness of the second antenna is set at, for example, about 0.02 mm and the length thereof is set at 53 mm for the reason which will be explained later. No restriction is specifically imposed on the width dimension of the second antenna 8.

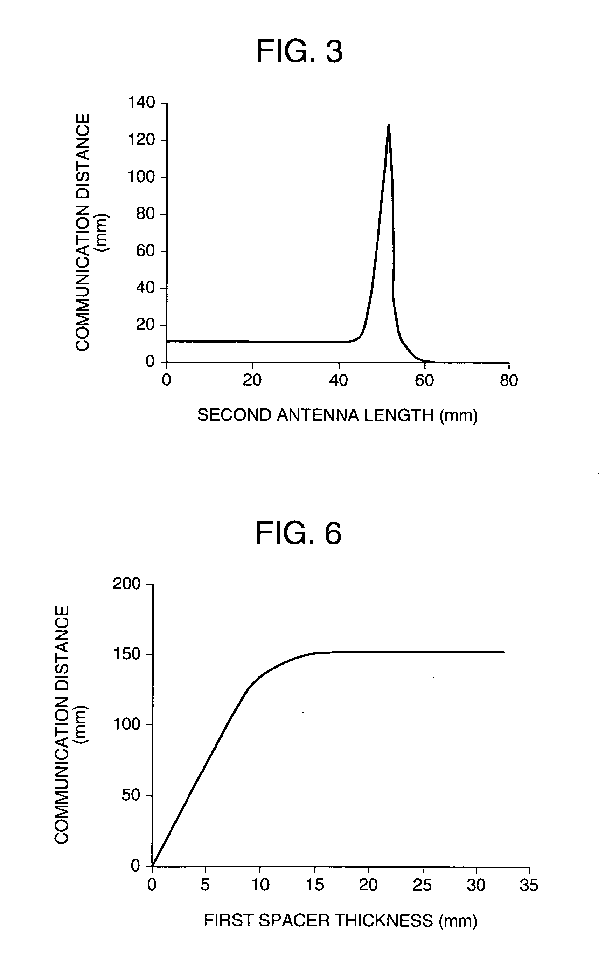

FIG. 3 is a graph showing an experiment test when the second spacer 7 is made of an insulating material having a constant dielectric constant and when a communication distance is measured with respect to the length of the second antenna 8. As shown in FIG. 3, the communication distance is as constant as about 12 mm, but as the length of the second antenna 8 increases and exceeds 45 mm, the communication distance becomes abruptly long. And when the length of the second antenna is increased to 53 mm, the communication distance becomes about 130 mm. As the length of the second antenna 8 is further increased, the communication distance becomes abruptly short to the contrary. When the length reaches about 60 mm, the antenna cannot communicate with at all (the communication distance being zero). It is assumed in the first embodiment that the second antenna 8 is set to have a length of 53 mm corresponding to the longest communication distance on the basis of the above experiment result.

For increasing the communication distance, the insulating material used as the material of the second spacer 7 is required to have advantageously a small dielectric constant. The insulating material of the first spacer 6 may be the same as or different from the insulating material of the second spacer 7. However, it is already known that the insulating material of the second spacer 7 exerts more influence upon the communication distance than that of the first spacer 6. For example, when the first spacer 6 is made of a foam material having a dielectric constant close to the dielectric constant of air and when the second spacer 7 is made of a rubber, the dielectric constant of the material of the second spacer 7 is larger than that of the first spacer 6. This results in that the communication distance becomes short.

It is theoretically known that, when the length of the second antenna 8 is set at 1/2 of the wavelength of a radio wave which has a predetermined frequency (2.45 GHz) and which is used to read out information from the radio IC tag, the radio IC tag has the longest communication distance. However, the communication distance varies with the dielectric constant, etc. of the second spacer 7. When the second spacer 7 is made of an insulating material having a large dielectric constant, the length of the second antenna 8 can be made short. For example, when the second spacer 7 is made of a chloroprene rubber as an insulating material, it is already known that, to secure the same communication distance as the external antenna, the length of the second antenna 8 can be shortened to 45 mm from the aforementioned 53 mm, though its experiment result is not shown.

In this way, the length of the second antenna 8 has a trade-off relation with the dielectric constant of the insulating material of the second spacer 7. For this reason, when an insulating material having a suitable dielectric constant is selected, there can be realized a radio IC tag which can be made small in its thickness by adding the second spacer 7 and the second antenna 8, can be made short in its longitudinal direction length by shortening the antenna, and also can secure a relatively long communication distance. In the above example, since the length of the first antenna 3 is made the same as that of the second antenna 8, that is, to be 45 mm, there can be realized a small radio IC tag which is thin in its thickness and short in its longitudinal direction dimension.

Table 1 shows examples of a radio IC tag when the thicknesses of the first and second spacers 6 and 7 are varied. In this connection, the thickness of the inlet 1 is set to be the same as that of the second antenna 8.

**Table 1**

| | Example 1 | Example 2 | Example 3 |
|---|---|---|---|
| 2nd antenna thickness | About 0.02 | About 0.02 | About 0.02 |
| 2nd spacer thickness | 0.3 | 0.6 | 0.6 |
| Inlet (TCP) thickness | About 0.1 | About 0.1 | About 0.1 |
| 1st spacer thickness | 0.1 | 0.4 | 1.0 |
| Entire thickness of radio IC tag | About 0.5 | About 1.1 | About 1.7 |
| Unit: mm | | | |

As shown in Table 1, when the structure of Example 1 is employed, a resultant radio IC tag can be made thinnest. For example, when a highest priority is given to thinning of the radio IC tag, the radio IC tag based on the above Example 1 can be employed. As compared with Examples 2 and 3, however, it is required to accurately adjust the length of the second antenna 8 to a prescribed value depending on the material of the first spacer 6. If the condition is not satisfied, then the communication distance of the radio IC tag fluctuates. Example 1 corresponds to the radio IC tag according to the first embodiment explained in connection with FIG. 2B.

In the case of Example 2 of the radio IC tag, the thickness of Example 2 is larger than that of Example 1. However, the accuracy to adjust the length of the second antenna 8 is not required to be as high as in Example 1. Even when the accuracy is not satisfied, the communication distance of the radio IC tag of Example 2 can reliably be more stable than that of Example 1. For example, when it is not necessarily desired to make the radio IC tag preferentially thin and when it is desired to reduce its manufacturing cost by decreasing the number of adjusting steps, Example 2 can be used.

For the purpose of increasing the communication distance, as shown in Examples 1, 2 and 3, it is desirable that the thickness of the second spacer 7 be made larger than that of the first spacer 6.

The thickness of the radio IC tag of Example 3 is larger than that of the radio IC tag of Example 2. However, as will be seen from FIG. 6, since the communication distance can be made large by increasing the thickness of the first spacer 6, the radio IC tag of Example 3 can be used depending on its applications.

Explanation will next be made as to the operation of a system using the radio IC tag sometimes by referring to FIG. 1.

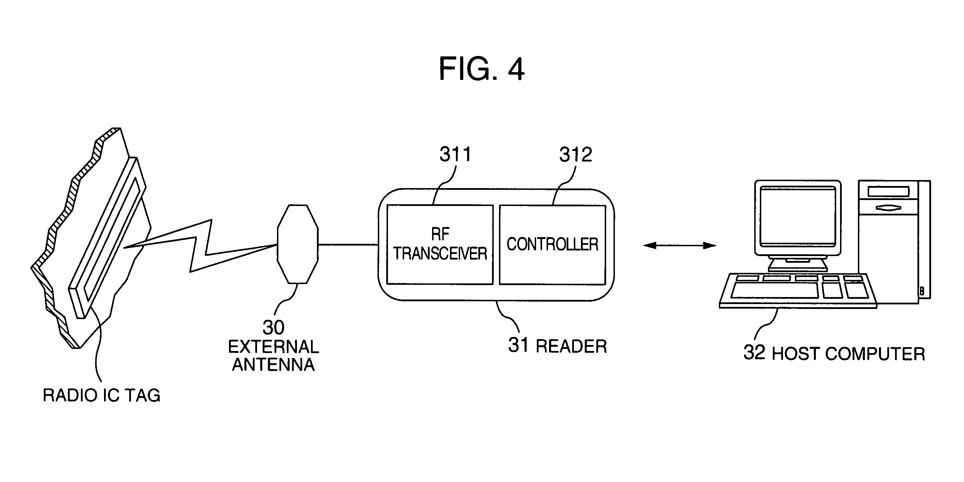

FIG. 4 shows a configuration of an IC tag system. The IC tag system includes a radio IC tag, an external antenna 30 for transmitting or receiving a radio wave having a predetermined frequency to or from the radio IC tag, a reader 31 for controlling the transmission and reception of the radio wave to and from the external antenna 30, and a host computer 32 for instructing the reader 31 to read an ID code stored in the radio IC tag. An RF (radio frequency) transceiver 311 provided in the reader 31 inputs/outputs signals or modulates/demodulates incoming/outgoing signals; while a controller 312 in the reader 31 communicates with the host computer 32 or inputs/outputs a signal to/from the RF transceiver 311.

Explanation will then be made in connection with an example where an ID code stored in the radio IC tag mounted to the metallic member 5 is read out. When receiving an instruction from the host computer 32 to read the ID code stored in the radio IC tag, the controller 312 in the reader 31 controls the RF transceiver 311 to transmit a radio wave having a predetermined frequency (2.45 GHz) from the external antenna 30 toward the radio IC tag. The second antenna 8 of the radio IC tag when receiving the radio wave resonates with the first antenna 3 when receiving the wave similarly, thus generating an operating power larger than that in the conventional. The IC chip 4 is operated by the generated operating power to read the ID code previously written therein and to transmit it to the external antenna 30. The reader 31 receives the ID code from the radio IC tag via the external antenna 30, and the controller 312 accepts the received ID code from the RF transceiver 311 and transmits it to the host computer 32. The host computer 32 when receiving the ID code, uses the code as, for example, information relating to the metallic member 5 having the radio IC tag mounted thereto.

Although the conventional radio IC tag has a communication distance as short as only 10 mm, the radio IC tag of the present embodiment can have a communication distance of 130 mm as mentioned above. Thus, a distance between the radio IC tag and external antenna 30 shown in FIG. 4 can be 130 mm. As a result, though it is required to use, as the external antenna 30, an exclusive external antenna (enabling short-distance communication) suitable for the metallic member 5 having a large dielectric constant in the conventional; a usual external antenna being widely used can be employed by increasing the communication distance as mentioned above.

The member 5, to which the radio IC tag of the present embodiment is to be preferably mounted, is not limited to only the aforementioned metallic member. For example, the member 5 may a glass member containing water therein or such a member containing water and having a large dielectric constant as animal body.

In accordance with the present embodiment, a communication distance at the predetermined frequency can be made about 13 times longer than the communication distance of the conventional radio IC tag, while suppressing the entire thickness of the radio IC tag. Further, when the first and second spacers 6 and 7 are made of an insulating material and when the thickness of the second spacer 7 is made larger than that of the first spacer 6, there can be realize an effective radio IC tag which has a long communication distance. In this connection, connections between the respective antennas and spacers in the radio IC tag may be made with an adhesive.

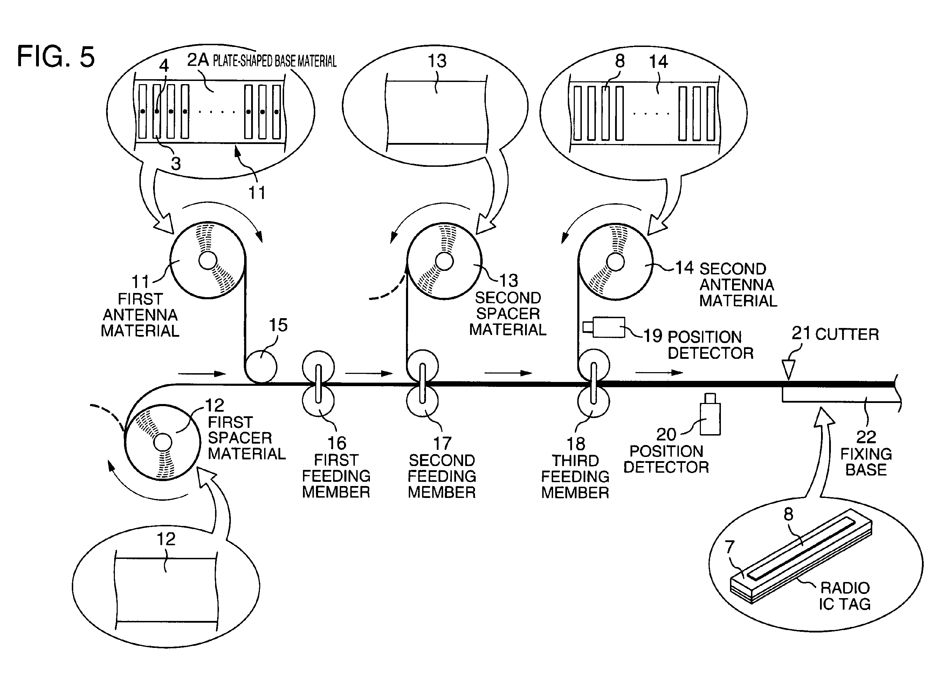

FIG. 5 schematically shows an arrangement of an apparatus for manufacturing the radio IC tag (having such a structure as shown in FIG. 1) of the present invention. The same constituent elements as in FIG. 1 are denoted by the same reference numerals. Shown in circles given near an inlet material 11, a first spacer material 12, a second spacer material 13 and a second antenna material 14 to be explained later, are plan views of parts of the respective materials. Similarly shown in a circle given in the lower right side of FIG. 5 is a radio IC tag (having a structure similar to FIG. 1) manufactured by the radio IC tag manufacturing apparatus.

In FIG. 5, the antenna material 11 (more specifically, inlet material) is already known as a TCP inlet obtained by arranging many, e.g., 10,000 of first antennas 3 each connected with the IC chip 4 shown in FIG. 1 on a plate-shaped base material 2A along the width direction of the first antennas 3 in the form of parallel and spaced strips and then by winding the base material 2A into a roll, as mentioned above. Thus the antenna material 11 can also be used as it is. The first spacer material 12 (meaning a plate material before cut into the first spacers 6 shown in FIG. 1) is made of a foam material, one side of which is used as an adhesive surface, a pressure sensitive adhesive double coated tape as an example is applied to the side, and the foam material is wound into a roll in this condition. The second spacer material 13 (meaning a plate material before into the second spacers 7 of the width dimension shown in FIG. 1) is also made of a foam material, one side of which is used as an adhesive surface, a pressure sensitive adhesive double coated tape as an example is applied to the side, and the foam material is wound into a roll in this condition. The second antenna material 14 is obtained by arranging many, e.g., 10,000 of second antennas 8 on a base material as a protective film along the width direction of the second antennas 8 in the form of parallel and spaced strips and then by winding the base material into a roll. In this connection, the second antenna material 14 may be such a plate material as a copper plate in place of the antenna material having the above strips-like-arranged antennas mounted thereon. In this case, the plate material is cut into pieces of a width dimension similar to the first or second spacer 6 or 7 to obtain a radio IC tag, which will be explained later.

A roller 15 has a sprocket which engages in holes (not shown) made at equal intervals, e.g., at both side edges of the antenna material 11 fed out by a not-shown driving source to further feed the antenna material 11. A first feeding member 16 compresses the antenna material 11 fed out by the not-shown driving source and the first spacer material 12 fed out by a not-shown driving source, and feeds the compressed material forward (in an arrow direction). A second feeding member 17 compresses the plate material compressed and fed out by the first feeding member 16 and the second spacer material 13 fed out by a not shown driving source, and then feeds out the compressed material forward (in an arrow direction). A third feeding member 18 compresses the plate material compressed and fed out by the second feeding member 17 and the second antenna material 14 fed out by a not shown driving source, and then feeds out forward (in an arrow direction).

A position detector 19 generates a signal to control feed timing of the second antenna material 14. The position detector 19 is required to detect the position of the second antenna 8 when the second antenna material 14 has the second antennas 8 arranged in its width direction in the form of parallel and spaced strips as shown in FIG. 5. A position detector 20 generates a signal to control the timing when a cutter 21 cuts the radio IC tag material fed out by the third feeding member 18. A fixing base 22 is used as a base when the radio IC tag material is cut by the cutter 21, and also used as a mounting base on which the single radio IC tag of FIG. 1 cut and manufactured is placed.

Explanation will be made as to steps of manufacturing the radio IC tag with use of the radio IC tag manufacturing apparatus, by referring to FIG. 5. First, the first spacer material 12 is guided by the not-shown driving source along a guide rail to restrict, e.g., the position of the material in the width direction, and fed out to the first feeding member 16. Simultaneously with it, the antenna material 11 is guided and fed out by the not-shown driving source along a guide rail to restrict, e.g., the position of the material in the width direction so that the sprocket of the roller 15 engages in not-shown holes made at the both side edges of the first antenna material, whereby the antenna material 11 is fed out to the first feeding member 16. During the feeing out of the first spacer material 12, the cover of the spacer material covering the adhesive surface as shown by a broken line is peeled off (during which antistatic treatment is applied to the spacer material), and the spacer material is then fed out. Thus after the antenna material 11 passes through the position of the roller 15, the antenna material 11 is bonded to the adhesive surface of the first spacer material 12, and thereafter, the bonded plate material is by the first feeding member 16 and fed out toward the second feeding member 17.

At the time point when the plate material (having a 2-layer structure of the first spacer material 12 and the antenna material 11) is fed out by the first feeding member 16, the second spacer material 13 is also guided along a guide rail by a not-shown driving source to restrict the position of the material in the width direction and fed out to the second feeding member 17. During the above operation, the cover of the second spacer material 13 covering its one adhesive side is peeled off as shown by a broken line (during which antistatic treatment is applied to the spacer material), and then the second spacer material is fed out to the second feeding member 17. Thus, when the plate material fed out from the first feeding member 16 arrives at the position of the second feeding member 17, the plate material is bonded to the adhesive surface of the second spacer material 13, compressed and then fed out to the third feeding member 18. As mentioned above, the other surface of the second spacer material 13 is also an adhesive surface.

At the time point when the plate material (having a 3-layer structure of the first spacer material 12, antenna material 11 and second spacer material 13) is fed out from the second feeding member 17, the second antenna material 14 is also guided by the not-shown driving source along a guide rail to restrict, e.g., the position of the second antenna material 14 in the width direction, and then fed out to the third feeding member 18. Therefore, when the plate material of the 3-layer structure fed out from the second feeding member 17 arrives at the position of the third feeding member 18, the plate material is bonded to the other adhesive surface of the second spacer material 13, compressed and then fed out to the cutter 21 as a tag material of 4-layer structure.

When the second antenna material 14 has a predetermined number of the second antennas 8 arranged along their width direction in the form of parallel and spaced strips as shown in FIG. 5, the timing of feeding out the second antenna material 14 is required to be controlled so that, upon the compression by the third feeding member 18, one of the second antennas 8 of the second antenna material 14 coincides in position with one of the first antennas 3 of the antenna material 11. This timing signal is generated by the position detector 19 as mentioned above. Thus on the basis of the signal from the position detector 19, the driving operation of a driving source (not shown) for feeding out the second antenna material 14 is controlled.

When the second antenna material 14 is a plate material as in the first and second spacer materials 12 and 13, the second antenna material is cut into pieces having the same width as when the first and second spacers 6 and 7 are cut, which will be explained later. For this reason, it becomes unnecessary to control the feed timing with use of the position detector 19.

When the radio IC tag material is fed out from the third feeding member 18 and arrives at the position of the cutter 21, the material is sequentially cut into pieces having such a width direction as shown in FIG. 1, which results in that a radio IC tag having a structure similar to in FIG. 1 is manufactured as shown by a circle given in the lower right side of FIG. 5. This cut timing signal is generated by the position detector 20 as mentioned above. The cutter 21 is operated based on the signal received from the position detector 20. The cut timing is when the position detector 20 detects previously-marked positions indicative of cut positions marked at an side end of the antenna material 11 (more specifically, the plate-shaped base material 2A) in the width direction. However, the present invention is not limited to such cut timing.

When the second antenna material 14 is a plate-shaped material, the width dimension of the second antenna 8 is not the same as that of the second antenna 8 shown in FIG. 1, and the second antenna material 14 is cut into pieces having a dimension similar to the first and second spacers 6 and 7.

In the cutting, when the 4-layer material is fully cut, this involves troublesome post treatment after the cutting (the cut radio IC tags are scattered on the fixing base 22). To avoid this, the 4-layer material is fully cut down to the second antenna material 14, second spacer material 13, and antenna material 1. However, it is desirable that the first spacer material 12 as the lowermost layer be perforated to form a perforation therein and as a result, the respective radio IC tags thus manufactured be arranged to be continuous to each other on the fixing base 22.

Further, as the material is sequentially cut to manufacture radio IC tags, the adhesive surface is exposed in the cut surface. In this connection, a treatment to remove the adhesion from the adhesive surface may be applied thereto. For example, powder may be applied to the cut surface and thereafter its powder removing operation or the like may be carried out.

In accordance with the present embodiment, there can be manufactured a radio IC tag which uses the first antenna, first spacer, second antenna and second spacer. In manufacturing the radio IC tag, the plate-shaped first antenna material, plate-shaped second antenna material, plate-shaped first spacer material and plate-shaped second spacer material can be used. Further, the plate-shaped first antenna material, plate-shaped first spacer material and plate-shaped second spacer material, and the second antenna material having a predetermined number of second antennas arranged in the width direction in the form of parallel and spaced strips can be used.

In accordance with the present embodiment, there can be realized an apparatus for manufacturing the radio IC tag with use of the plate-shaped first antenna material, plate-shaped first spacer material, plate-shaped second antenna material and plate-shaped second spacer material. Further, there can be realized an apparatus for manufacturing the radio IC tag, with use of the plate-shaped first antenna material, plate-shaped first spacer material and plate-shaped second spacer material, and the second antenna material having a predetermined number of second antennas arranged along the width direction in the form of parallel and spaced strips.

The embodiments of the present invention have been explained. However, the present invention is not limited to the aforementioned embodiments, but may be embodied in other various manners. Although explanation has been made, in particular, in connection with the case where the second spacer and antenna are laminated in the conventional inlet in the above embodiment; such another arrangement may be considered that a radio IC tag has a multi-layer structure of spacers and antennas. For example, a third spacer and a third antenna are further laminated on the second antenna, a fourth spacer and a fourth antenna are laminated further on the third antenna, and so on. In addition, the frequency of the radio wave is also not limited to the aforementioned 2.45 GHz, and another frequency may be employed.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A radio IC tag comprising:
an IC chip (4) for storing identification information therein;
a first antenna (3) having a predetermined length and connected to said IC chip; and
a first spacer (6) disposed between said first antenna and a member (2) having said IC chip mounted thereon for holding a distance between said first antenna and said member,
wherein said IC chip (4) transmits said identification information using an operating power of a radio wave having a predetermined frequency received via said first antenna,
said radio IC tag further comprising:
a second antenna (8) having a predetermined length for resonating with said radio wave having the predetermined frequency; and
a second spacer (7) disposed between said first antenna and said second antenna for holding a distance between said both antennas.

2. The radio IC tag as set forth in claim 1, wherein said first and second spacers (6, 7) are made of an insulating material and a thickness of said second spacer (7) is larger than that of said first spacer (6).

3. The radio IC tag as set forth in claim 1, wherein connections between said first spacer (6) and said first antenna (3) connected to said IC chip (4), between said first antenna (3) and said second spacer (7), and between said second spacer (7) and said second antenna (8) are made with an adhesive.

4. A method for manufacturing a radio IC tag including an IC chip (4), comprising the steps of:
mounting a first spacer (6) on one surface of a first antenna (3) for transmitting identification information stored in said IC chip (4);
mounting a second spacer (7) on the other surface of said first antenna (3); and
mounting a second antenna (8) on one surface of said second spacer (7) opposite to the other surface thereof having said first antenna (3) mounted thereon, said second antenna (8) resonating with a radio wave having a predetermined frequency together with said first antenna (3).

5. A method for manufacturing a radio IC tag, comprising the steps of:
mounting a plate-shaped first spacer material (12) on one surface of a first antenna material (11), said first antenna material (11) including a predetermined number of first antennas (3) each connected with an IC chip (4) having identification information stored therein, said first antennas (3) being arranged on a plate-shaped base material (2A) along a width direction of the first antennas (3) in the form of mutually parallel and spaced strips, and feeding out a 2-layer material thus combined;
mounting a plate-shaped second spacer material (13) on the other surface of said fed-out first antenna material (11) and feeding out a 3-layer material thus combined;
mounting a plate-shaped second antenna material (14) on the other surface of said fed-out second spacer material (13) opposite to one surface thereof provided with said first antenna material, and feeding out a 4-layer material thus combined; and
sequentially said fed-out radio IC tag material into radio IC tags.

6. A method for manufacturing a radio IC tag, comprising the steps of:
mounting a plate-shaped first spacer material (12) on one surface of a first antenna material (11), said first antenna material (11) including a predetermined number of first antennas (3) each connected with an IC chip (4) having identification information stored therein, said first antennas (3) being arranged on a plate-shaped base material (2A) along a width direction of the first antennas (3) in the form of mutually parallel and spaced strips, and feeding out forward a 2-layer material thus combined;
mounting a plate-shaped second spacer material (13) on the other surface of said fed-out first antenna material (11) and feeding out forward a 3-layer material thus combined;
mounting a plate-shaped second antenna material (14) on the other surface of said fed-out second spacer material (13) opposite to one surface thereof provided with said first antenna material (11), said second antenna material (14) including a predetermined number of second antennas (8) arranged along a width direction of the second antennas (8) in the form of mutually parallel and spaced strips, in such a manner that said first antennas (3) coincide in width direction position with said second antennas (8), and feeding out forward a 4-layer material thus combined; and
sequentially said fed-out radio IC tag material into radio IC tags.

7. The method as set forth in claim 6, further comprising a step of performing position detection to make one of the antennas (3) included in said first antenna material (11) coincide with one of the antennas (8) included in said second antenna material (14).

8. An apparatus for manufacturing a radio IC tag, comprising:
first feeding means (16) for mounting a plate-shaped first spacer material (12) on one surface of a first antenna material (11), said first antenna material (11) including a predetermined number of first antennas (3) each connected with an IC chip (4) having identification information stored therein, said first antennas (3) being arranged on a plate-shaped base material (2A) along a width direction of the first antennas (3) in the form of mutually parallel and spaced strips, and feeding out a 2-layer material thus combined;
second feeding means (17) for mounting a plate-shaped second spacer material (13) on the other surface of said first antenna material (11) fed out by said first feeding means and feeding out a 3-layer material thus combined;
third feeding means (18) for mounting a plate-shaped second antenna material (14) on the other surface of said second spacer material (13) fed out by said second feeding means opposed to one surface thereof provided with said first antenna material (11), and feeding out a 4-layer material thus combined; and
cutting means (21) for sequentially cutting said radio IC tag material fed out by said second feeding means into radio IC tags.

9. An apparatus for manufacturing a radio IC tag, comprising:
first feeding means (16) for mounting a plate-shaped first spacer material (12) on one surface of a first antenna material (11), said first antenna material (11) including a predetermined number of first antennas (3) each connected with an IC chip (4) having identification information stored therein, said first antennas (3) being arranged on a plate-shaped base material (2A) along a width direction of the first antennas (3) in the form of mutually parallel and spaced strips, and feeding out a 2-layer material thus combined;
second feeding means (17) for mounting a plate-shaped second spacer material (13) on the other surface of said first antenna material (11) fed out by said first feeding means, and feeding out a 3-layer material thus combined;
third feeding means (18) for mounting a plate-shaped second antenna material (14) on the other surface of said second spacer material (13) fed out by said second feeding means opposed to one surface thereof provided with said first antenna material (11), said second antenna material (14) including a predetermined number of second antennas (8) arranged along a width direction of the second antennas (8) in the form of mutually parallel and spaced strips, in such a manner that said first antennas (3) coincide in width direction position with said second antennas (8), and feeding out a 4-layer material thus combined; and
cutting means (21) for sequentially said radio IC tag material fed out by said second feeding means into radio IC tags.

10. The radio IC tag manufacturing apparatus as set forth in claim 9, further comprising means (19) for performing position detection to controllably make one of the antennas (3) included in said first antenna material (11) coincide with one of the antennas (8) included in said second antenna material (14).

11. A radio IC tag including an IC chip (4) having identification information stored therein, comprising:
a first antenna (3) connected to said IC chip (4) for receiving a radio wave having a predetermined frequency;
a first spacer (6) provided between an article to be identified by the identification information stored in said IC chip and said first antenna;
a second antenna (8) for resonating with the radio wave having said predetermined frequency; and
a second spacer (7) provided between said first antenna and said second antenna.

12. The radio IC tag as set forth in claim 11, wherein said second antenna (8) has a length associated with a wavelength of said radio wave.

13. The radio IC tag as set forth in claim 11, wherein the length of said second antenna (8) and the material of said second spacer (7) have a correlative relation based on a communication distance between said radio IC tag and an external antenna (30) for communication.

14. The radio IC tag as set forth in claim 11, wherein said first spacer (6) is larger in thickness than said second spacer (7).
